# EUROPEAN PATENT SPECIFICATION

(11) **EP 3 389 243 B1**
(45) Date of publication and mention of the grant of the patent: **09.09.2020**
(21) Application number: 16908676.6
(22) Date of filing: 16.11.2016
(51) Int. Cl.: H04L 29/12, H04L 29/08

(54) **DNS NETWORK SYSTEM, AND DOMAIN NAME RESOLUTION METHOD AND SYSTEM**
DNS-NETZWERKSYSTEM SOWIE DOMAINNAMENAUFLÖSUNGSVERFAHREN UND SYSTEM
SYSTÈME DE RÉSEAU DNS, ET PROCÉDÉ ET SYSTÈME DE RÉSOLUTION DE NOM DE DOMAINE

(30) Priority: 14.07.2016 CN 201610552767
(43) Date of publication of application: 17.10.2018
(73) Proprietor: Wangsu Science & Technology Co., Ltd., Shanghai 200030 (CN)
(72) Inventor: WU, Xiaoying, Shanghai 200030 (CN); WANG, Jianxiong, Shanghai 200030 (CN); ZHENG, Weiji, Shanghai 200030 (CN); WU, Zhenyong, Shanghai 200030 (CN)
(74) Representative: Hanna Moore + Curley
(86) International application number: PCT/CN2016/106049
(87) International publication number: WO 2018/010353

(56) References cited:
- EP-A2- 1 207 668
- WO-A1-2013/059541
- CN-A- 101 986 642
- CN-A- 103 957 285
- CN-A- 104 796 499
- CN-A- 104 995 890
- CN-A- 105 357 328
- US-A1- 2009 164 661
- US-A1- 2011 093 522

## Description

### FIELD OF THE DISCLOSURE

The present disclosure relates to the field of network communication, and more particularly, relates to a domain name system (DNS) network system, a domain-name parsing method and system, a database system, and a server.

### BACKGROUND

Existing DNS server networks generally use global configuration. The DNS servers of each public network often randomly select an authoritative DNS server when sending a parsing request. Thus, the DNS servers are, to a large extent, not able to select the optimized authoritative DNS server for the parsing request, directly causing a longer request time. For example, if ten (10) authoritative DNS servers are shared by the users all over the world, the public recursive DNS servers of each country randomly select one of the authoritative DNS servers to access. There is a high probability the public recursive DNS servers are not able to select the optimized authoritative DNS server.

In addition, many domain name registrars do not distinguish domain names, and they are not able to directly zone and authorize the upper authoritative DNS server of the domain name registrars. Thus, the existing DNS network architecture needs to be further optimized in terms of parsing method, to improve the efficiency of parsing.

The prior art disclosure US 2011/0093522 A1 discloses a method and system to determine a web server based on geo-location information. The system includes a local DNS server coupled to a web client; a plurality of web servers; and a global load balancer coupled to the local DNS server.

The prior art disclosure US 2009/164661 A1 discloses a system and method for selecting an optimal authoritative name server which includes global authoritative name servers and regional authoritative name servers.

The prior art disclosure EP 1207668 A2 discloses a system and a method for load balancing multiple globally-dispersed servers based on client-centric performance criteria. The infrastructure of the system includes load balancing domain name servers.

The prior art disclosure CN 105357328 A discloses a DNS method, a DNS recursive server and a DNS system, wherein NS record information containing a plurality of next-level DNS authoritative servers and priority information thereof is transmitted to the DNS recursive server once through a prior-level DNS authoritative server, so that multiple backups of the next-level DNS authoritative servers can be realized, and the domain name query request of the DNS recursive servers can still be responded during the failure of a master DNS authoritative server.

### BRIEF SUMMARY OF THE DISCLOSURE

In view of the shortcomings of the conventional technology, the goal of the present disclosure includes providing a DNS network system, a domain-name parsing method and system, a database system, and a server, to solve the problem such as low domain-name parsing efficiency, caused by inferior zonings in parsing servers in the conventional technology.
- To implement the aforementioned goal and other related goals, the present disclosure provides a DNS network system as defined in claims 1 to 3.
- To implement the aforementioned goal and other related goals, the present disclosure provides a domain-name parsing method as defined in claims 4-8.

To implement the aforementioned goal and other related goals, the present disclosure provides a domain-name parsing system as defined in claim 9.

As illustrated above, the DNS network system, domain-name parsing method and system, database system, and server provided by the present disclosure may allow a request by a server in a local operator to be received in the local operator and a request by a server in a local region to be received by a server in the local region, such that failure rates of cross-operator and cross-region parsing may be reduced. The ultimate authoritative DNS server may be located rapidly, and DNS parsing may be improved. In addition, if the ultimate authoritative DNS server is under attack, the impact caused by the attack may be limited to only the region under attack and would not affect the entire network. Further, in the present disclosure, the division of the ultimate authoritative DNS servers may be implemented through the A-record. By modifying the A-record, fast scheduling may be obtained.

### BRIEF DESCRIPTION OF THE DRAWINGS

FIG. 1 illustrates a structure of an exemplary DNS network system consistent with the disclosed embodiments of the present disclosure;
FIG. 2 illustrates an exemplary flow chart of a domain-name parsing process consistent with the disclosed embodiments of the present disclosure; and
FIG. 3 illustrates an exemplary block diagram of a domain-name parsing process consistent with the disclosed embodiments of the present disclosure.

### DETAILED DESCRIPTION

Other advantages and effects of the present disclosure will become apparent to those skilled in the art from the following description of the present disclosure by way of specific embodiments with reference to the accompanying drawings. The present disclosure may also be embodied or applied by a further different embodiment, and the details in this specification may be modified or varied on the basis of different views and applications. It is to be noted that, without conflict, the features of the following embodiments and examples may be combined with each other.

It should be noted that the illustrations provided in the following examples illustrate only the basic concept of the present disclosure in a schematic manner, and only the components related to the present disclosure are shown in the drawings, rather than the number, shape and size of the actual components. The actual implementation of the various components of the type, quantity and proportion can be changed flexibly, and the layout type of components may also be more complex.

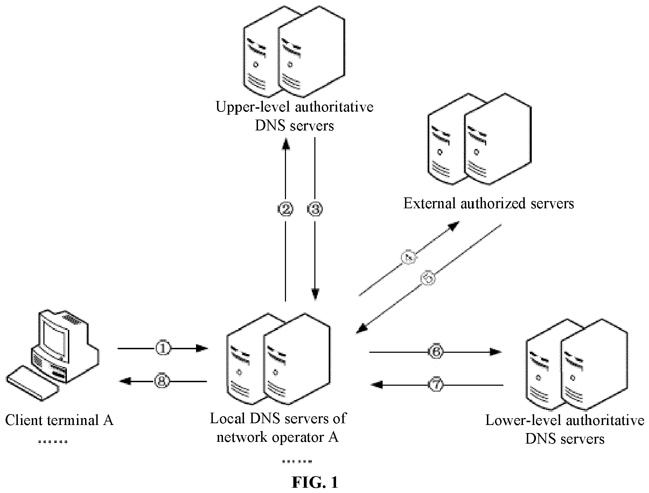

As show in FIG. 1, the present disclosure provides a DNS network system, including:
(1) The local DNS server of at least one network operator, e.g., a public-network DNS server of China Telecom or public-network DNS servers of China Unicom. The local DNS server is used for ① receiving a domain-name parsing request from a client terminal of the at least one network operator, and sending the domain-name parsing request, lever by level, from the root server to a lower-level authoritative DNS server for recursive query. For example, client terminal A is a client of network operator A, and the domain-name parsing request for aaa.com sent by the client terminal A may be received by a public-network DNS server of the network operator A. In another example (not shown), client terminal B is a client of network operator B, and the domain-name parsing request for aaa.com may be received by a public-network DNS server of the network operator B.
(2) An upper-level authoritative DNS server for storing the NS record of at least one external authorized server. The upper-level authoritative DNS server is configured for, when ② receiving the domain-name parsing request from the local DNS server, providing corresponding NS record to the local DNS server(3) based on the information of the top-level domain name in the domain-name parsing request, thus enabling the local DNS server to access a corresponding external authorized server according to the A-record in the NS record. That is, in the present disclosure, the upper-level authoritative DNS servers originally used to parse top-level domain names may not directly parse domain names. Instead, the upper-level authoritative DNS server may authorize the external authorized server to parse the top-level domain names. It should be noted that, the top-level domain name parsed by the external authorized server is different from the top-level domain name in the domain-name parsing request, so as to prevent the local DNS server from accessing the upper-level authoritative DNS server again. For example, the upper-level authoritative DNS server may be a COM server used for parsing top-level domain names with ".com". Then, the external authorized server may not be a COM server and may be a CN server for parsing top-level domain names with ".cn". The external authorized server may also be a NET server for parsing top-level domain names with ".net", and so on. If the external authorized server is a COM server, the domain-name parsing request may be returned to the upper-level authoritative DNS server, and may not be forwarded to the external authorized server for the subsequent operations.
(3) The external authorized server. The external authorized server stores at least one IP address and the geographical location information of at least one operator forming a one-to-one correspondence relationship with the at least one IP address. The geographical location information of the at least one operator may each be associated with the corresponding A-records of lower-level authoritative DNS servers. For example, the external authorized server stores Table 1 and Table 2. Table 1 includes an IP address range starting from "beginning of IP" to "end of IP". Each IP address range may correspond to the corresponding geographical location information of the operators. As shown in Table 1, an IP address in the IP address range of "1.1.1.1 .-1.1.1.255" may correspond to an operator having the geographical location information of "dx Fujian", indicating "The Telecommunications of Fujian Province". After "dx_Fujian" has been located, the "202.101.98.55" can be found as the A-record of the lower-level authoritative DNS server in Table 2. It should be noted that, when adding or removing an external authorized server, the NS record in Table 2 may be added or deleted accordingly, as well as the geographic location information of the operators and the A-records of the lower-level authoritative DNS servers.

**Table 1**

| IP address range | | Geographical location information of operators |
|---|---|---|
| Beginning of IP | End of IP | |
| 1.1.1.1 | 1.1.1.255 | dx_Fujian |
| ...... | ...... | ...... |

**Table 2**

| NS | Geographical location information of operators | A-record of lower-level authoritative DNS server |
|---|---|---|
| dns1.aaa.co | dx_Fujian | 202.101.98.55 |
| ...... | ...... | ...... |

When ④ receiving the domain-name parsing request sent by the local DNS servers, the external authorized server may ⑤ match the IP of the request, i.e., the public IP of the local DNS servers, to at least one IP address, to search for the corresponding geographical location information of operator, and provide the A-record of the lower-level authoritative DNS servers, associated with the geographical location information of the operator, to the local DNS servers for access. Thus, when a lower-level authoritative DNS server is added or deleted, only the A-record stored in the external authorized server need to be modified accordingly.
(4) The lower-level authoritative DNS server. The lower-level authoritative DNS server is used for ⑦ parsing the domain-name parsing request and providing a domain-name parsing result to the local DNS server ⑥ when receiving the domain-name parsing request sent by the local DNS server.

It should be noted that, in the present disclosure, the upper-level authoritative DNS server may be authorized by the root server based on the top-level domain name in the domain-name parsing request. Apparently, besides authorizing the external authorized server by the upper-level authoritative DNS server, a next level authoritative DNS server of the upper-level authoritative DNS server, i.e., the authoritative DNS server for parsing the next level domain name, may also authorize the external authorized server, and so on. The next level authoritative DNS servers lower than the upper-level authoritative DNS server authorizing the external authorized server may have an inferior technical effect.

Similar to the working principles illustrated in the aforementioned embodiments, the present disclosure provides a server, which stores the NS record of at least one external device. When receiving a domain-name parsing request, the server may provide corresponding NS record based on the information of top-level domain name in the domain-name parsing request. Because the technical features illustrated in the aforementioned embodiments may also be in accordance with the present embodiment, repeated descriptions are not provided herein. It should be noted that, providing corresponding NS record based on the information of top-level domain name in the domain-name parsing request may include providing the external device corresponding to the NS record. The top-level domain name parsed by the external device may be different from the domain name in the domain-name parsing request.

Similar to the aforementioned working principles of the embodiments, the parent disclosure provides a database system. The database system may include at least one IP address and the geographical location information of at least one network operator forming a one-to-one correspondence relationship with the at least one IP address. The geographical location information of the at least one network operator may each be associated with the corresponding A-record of authoritative DNS servers, e.g., as shown in Tables 1 and 2. The technical features of the aforementioned embodiments may be applied in the present disclosure, and the technical features of the database system is not repeated herein.

Similar to the working principles of the aforementioned embodiments, the parent disclosure provides a server, including the aforementioned database system. The server may, when receiving the domain-name parsing request sent by an external device, match the IP of the external device to the at least one IP address, to search for the corresponding geographical location information of the network operator, and to provide the A-record of the authoritative DNS servers, associated with the geographical location information of the network operator, to the external device. The technical features of the aforementioned embodiments may be applied in the present embodiment, and the technical features of the server is not repeated herein.

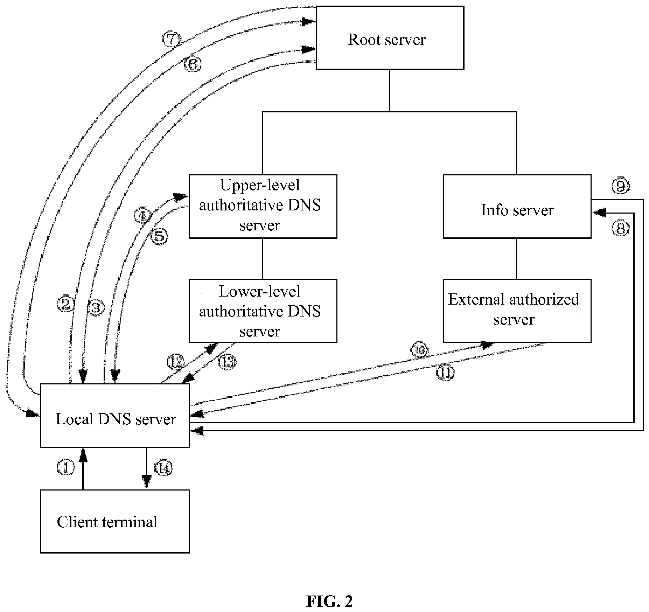

As shown in FIG. 2, similar to the working principle of the aforementioned embodiments, the present disclosure provides a domain-name parsing method. The domain-name parsing method may be applied in any of the mentioned DNS network systems. The technical features of the previous embodiments may be applied in the present disclosure, and the technical features of the domain-name parsing method is not repeated herein. Embodiments of the domain-name parsing method is illustrated in detail.
①The local DNS server of at least one network operator may correspondingly receive a domain-name parsing request from a client terminal of at least one network operator, e.g., inquiring the A-record of wsdns.com.
②The local DNS server may send the domain-name parsing request to the root server.
③The root server may return the NS record of an upper-level authoritative DNS server (e.g., COM server) to the local DNS server.
④The local DNS server may send the domain-name parsing request to the upper-level authoritative DNS server.
⑤The upper-level authoritative DNS server may notify the local DNS server that the info server has been authorized. It should be noted that, similar to the process that bbb.com obtains authorization from com when registering the domain name, the external authorized server in the present disclosure, when established, may register and obtain authorization from the info server. Further, the NS record of info sever may point to the external authorized server.
⑥The local DNS server may inquire the root server for the NS record of the info server.
⑦The root server may send the NS record of the info server to the local DNS server.
⑧The local DNS server may send the domain-name parsing request to the info server.
⑨The info server may send the NS record of the external authorized server to the local DNS server, the top-level domain name parsed by the external authorized server may be different from the top-level domain name in the domain-name parsing request.
⑩The local DNS server may send the domain-name parsing request to the external authorized server.
⑪The external authorized server may allocate the A-record of a lower-level authoritative DNS server to the local DNS server. The IP address, corresponding to the geographical location information of a network operator associated with the A-record, may match the public IP of the local DNS server.
⑫The local DNS server may send the domain-name parsing request to the lower-level authoritative DNS server.
⑬The lower-level authoritative DNS server may send the domain-name parsing result to the local DNS server.
⑭The local DNS server may return the domain-name parsing result to the client terminal for access.

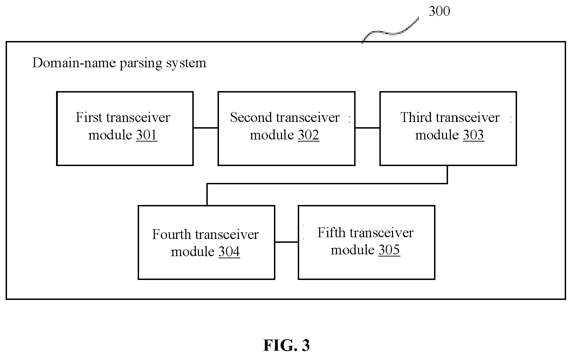

As shown in FIG. 3, similar to the working principles of the aforementioned domain-name parsing method, the present disclosure provides a domain-name parsing system 300, being a software configured on a hardware device, e.g., a local DNS server. The domain-name parsing system 300 may include a first transceiver module 301, a second transceiver module 302, a third transceiver module 303, a fourth transceiver module 304, and a fifth transceiver module 305. The technical features of the aforementioned embodiments may be applied in the present disclosure, and the technical features of the domain-name parsing system is not repeated herein.

The first transceiver module 301 may receive a domain-name parsing request from the client terminal of a network operator in the same network; the second transceiver module 302 may send the domain-name parsing request to the root server and receive the NS record of the upper-level authoritative DNS server returned by the root server; the third transceiver module 303 may send the domain-name parsing request to the upper-level authoritative DNS server and receive the NS record of an external authorized server returned by the upper-level authoritative DNS server; the fourth transceiver module 304 may send the domain-name parsing request to the external authorized server and receive the A-record of a lower-level authoritative DNS server returned by the external authorized server, where the IP address corresponding to the geographical location information of a network operator associated with the A-record, may match the public IP of the local DNS server; and the fifth transceiver module 305 may send the domain-name parsing request to the lower-level authoritative DNS and receive the domain-name parsing result returned by the lower-level authoritative DNS.

Thus, by external authorization, the DNS network system, domain-name parsing method and system, provided by the present disclosure, may assign the domain-name parsing request sent by the client terminal of each network operator to a desired authoritative server to parse. Parsing of domain names may be more efficient. The present disclosure effectively overcomes various shortcomings in the conventional technology and thus has high industrial value.

The abovementioned embodiments merely illustrate the principles and effects of the present disclosure and are not intended to limit the disclosure. Any person skilled in the art will be able to modify or alter the abovementioned embodiments. Accordingly, all equivalents or modifications that may be made by those skilled in the art without departing from the technical concept disclosed in the present disclosure are intended to be embraced by the claims of the present disclosure.

## Claims

1. A domain name system DNS network system, comprising:
a local DNS server of at least one network operator, configured to receive a domain-name parsing request from a client terminal of the at least one network operator, and send the domain-name parsing request from a root server to a lower-level authoritative DNS server level by level for performing a recursive query;
an upper-level authoritative DNS server, configured to, when receiving the domain-name parsing request from the local DNS server, notify the local DNS server that an info server has been authorized;
the info server, storing at least one type of NS record of an external authorized server, configured to, when receiving the domain-name parsing request from the local DNS server, provide a corresponding NS record to the local DNS server, such that the local DNS server accesses the external authorized server;
the external authorized server, when established, configured to register and obtain authorization from the info server, and store at least one IP address and geographical location information of the at least one network operator having a one-to-one correspondence relationship with the at least one IP address, wherein the geographical location information of the at least one network operator each associates with an A-record of a corresponding lower-level authoritative DNS server, the external authorized server being configured to, when receiving the domain-name parsing request from the local DNS server, match a public IP of the local DNS server with the at least one IP address to locate the geographical location information of a corresponding network operator, and provide the A-record of the corresponding lower-level authoritative DNS server associated with the network operator to the local DNS server for the local DNS server to access; and
the lower-level authoritative DNS server, configured to parse the domain-name parsing request,
when receiving the domain-name parsing request sent by the local DNS server, to provide a domain-name parsing result to the local DNS server.

2. The DNS network system according to claim 1, further comprising: a top-level domain name parsed by the external authorized server is different from the top-level domain name in the domain-name parsing request.

3. The DNS network system according to claim 1, wherein when adding or deleting an external authorized server and/or a lower-level authoritative DNS server, the NS record and/or corresponding A-record are modified accordingly.

4. A domain-name parsing method, being applied to the DNS network system according to any of claims 1-3, comprising:
receiving, by a local DNS server of at least one network operator, a domain-name parsing request from a client terminal of the at least one network operator, and sending, by the local DNS server of at least one network operator, level by level, the domain-name parsing request from a root server to a lower-level authoritative DNS server for performing a recursive query;
sending, by the local DNS server, the domain-name parsing request to the root server, and receiving, by the local DNS server, an NS record of an upper-level authoritative DNS server returned by the root server;
sending, by the local DNS server, the domain-name parsing request to the upper-level authoritative DNS server, and receiving, by the local DNS server, a notification that an info server has been authorized returned by the upper-level authoritative DNS server;
sending, by the local DNS server, an inquiry for the NS record of the info server to the root server, and receiving, by the local DNS server, the NS record of the info server returned by the root server;
sending, by the local DNS server, the domain-name parsing request to the info server, and receiving, by the local DNS server, an NS record of an external authorized server returned by the info server, wherein the external authorized server, when established, registers and obtains authorization from the info server;
sending, by the local DNS server, the domain-name parsing request to the external authorized server, and receiving, by the local DNS server, an A-record of a lower-level authoritative DNS server returned by the external authorized server, wherein an IP address corresponding to geographical location information of the network operator associated with A-record matches a public IP of the local DNS server; and
sending, by the local DNS server, the domain-name parsing request to the lower-level authoritative DNS server, and receiving, by the local DNS server, a domain-name parsing result returned by the lower-level authoritative DNS server.

5. The domain-name parsing method according to claim 4, further comprising: a top-level domain name parsed by the external authorized server is different from the top-level domain name in the domain-name parsing request.

6. The domain-name parsing method according to claim 4, wherein the external authorized server stores at least one IP address and the geographical location information of at least one operator forming a one-to-one correspondence relationship with the at least one IP address.

7. The domain-name parsing method according to claim 4, wherein the step after sending, by the local DNS server, the domain-name parsing request to the external authorized server comprising:
Matching, by the external authorized server, the public IP of the local DNS servers, to at least one IP address, to search for the corresponding geographical location information of operator, and providing, the external authorized server, the A-record of the lower-level authoritative DNS servers, associated with the geographical location information of the operator, to the local DNS servers for access.

8. The domain-name parsing method according to claim 5, wherein the upper-level authoritative DNS server is authorized by the root server based on the top-level domain name in the domain-name parsing request.

9. A domain-name parsing system configured on a local DNS server, comprising:
a first transceiver module, configured to enable the local DNS server of at least one network operator to correspondingly receive a domain-name parsing request from a client terminal of the at least one network operator;
a second transceiver module, configured to enable the local DNS server to send the domain-name parsing request from a root server to a lower-level authoritative DNS server for recursive query and receive an NS record of a upper-level authoritative DNS server returned by the root server;
a third transceiver module, configured to enable the local DNS server to send the domain-name parsing request to the upper-level authoritative DNS server, and receive a notification that an info server has been authorized returned by the upper-level authoritative DNS server;
a fourth transceiver module, configured to enable the local DNS server to send an inquiry for the NS record of the info server to the root server, and receive the NS record of the info server returned by the root server;
a fifth transceiver module, configured to enable the local DNS server to send the domain-name parsing request to the info server, and receive an NS record of an external authorized server returned by the info server, the external authorized server, being established, registered and authorized from the info server;
a sixth transceiver module, configured to enable the local DNS server to send the domain-name parsing request to the external authorized server, and receive an A-record of a lower-level authoritative DNS server returned by the external authorized server, wherein an IP address corresponding to geographical location information of the network operator associated with A-record matches a public IP of the local DNS server; and
a seventh transceiver module, configured to enable the local DNS server to send the domain-name parsing request to the lower-level authoritative DNS server, and receive a domain-name parsing result returned by the lower-level authoritative DNS server.

## Patentansprüche

1. Domainnamen-System-, DNS-Netzwerksystem, umfassend:
einen lokalen DNS-Server mindestens eines Netzbetreibers, der dafür konfiguriert ist, eine Domainnamen-Parsing-Anforderung von einem Client-Endgerät des mindestens einen Netzbetreibers zu empfangen und die Domainnamen-Parsing-Anforderung von einem Root-Server an einen autoritativen DNS-Server niedrigerer Ebene zu senden, Ebene für Ebene, um eine rekursive Abfrage durchzuführen;
einen autorisierenden DNS-Server der oberen Ebene, der dafür konfiguriert ist, beim Empfang der Domainnamen-Parsing-Anforderung vom lokalen DNS-Server den lokalen DNS-Server darüber zu informieren, dass ein Info-Server autorisiert wurde;
wobei der Info-Server, der mindestens einen Typ eines NS-Eintrags eines externen autorisierten Servers speichert, dafür konfiguriert ist, bei Empfang der Domainnamen-Parsing-Anforderung von dem lokalen DNS-Server einen entsprechenden NS-Eintrag an den lokalen DNS-Server zu liefern, so dass der lokale DNS-Server auf den externen autorisierten Server zugreift;
wobei der externe autorisierte Server, wenn er eingerichtet ist, dafür konfiguriert ist, sich zu registrieren und eine Autorisierung von dem Info-Server zu erhalten und mindestens eine IP-Adresse und eine geographische Standortinformation des mindestens einen Netzbetreibers zu speichern, die eins zu eins mit der mindestens einen IP-Adresse übereinstimmt, wobei die geographische Standortinformation des mindestens einen Netzbetreibers jeweils einem A-Eintrag eines entsprechenden autoritativen DNS-Servers niedrigerer Ebene zugeordnet ist, wobei der extern autorisierte Server dafür konfiguriert ist, bei Empfang der Domainnamen-Parsing-Anforderung vom lokalen DNS-Server eine öffentliche IP des lokalen DNS-Servers mit der mindestens einen IP-Adresse abzugleichen, um die geographische Standortinformation eines entsprechenden Netzbetreibers zu lokalisieren, und dem lokalen DNS-Server den A-Eintrag des entsprechenden autorisierenden DNS-Servers niedrigerer Ebene, der dem Netzbetreiber zugeordnet ist, zur Verfügung zu stellen, damit der lokale DNS-Server darauf zugreifen kann; und
wobei der autoritative DNS-Server der unteren Ebene, der dafür konfiguriert ist, die Domainnamen-Parsing-Anforderung zu parsen, wenn er die von dem lokalen DNS-Server gesendete Domainnamen-Parsing-Anforderung empfängt, um ein Domainnamen-Parsing-Ergebnis für den lokalen DNS-Server bereitzustellen.

2. DNS-Netzwerksystem nach Anspruch 1, ferner umfassend:
einen Domainnamen der obersten Ebene, der von dem externen autorisierten Server geparst wurde, sich von dem Domainnamen der obersten Ebene in der Domainnamen-Parsing-Anforderung unterscheidet.

3. DNS-Netzwerksystem nach Anspruch 1, wobei beim Hinzufügen oder Löschen eines externen autorisierten Servers und/oder eines autorisierenden DNS-Servers einer niedrigeren Ebene der NS-Eintrag und/oder der entsprechende A-Eintrag entsprechend modifiziert werden.

4. Domainnamen-Parsing-Verfahren, das auf das DNS-Netzwerksystem gemäß einem der Ansprüche 1 bis 3 angewendet wird, Folgendes umfassend:
Empfangen, durch einen lokalen DNS-Server mindestens eines Netzbetreibers, einer Domainnamen-Parsing-Anforderung von einem Client-Endgerät des mindestens einen Netzbetreibers, und Senden, durch den lokalen DNS-Server mindestens eines Netzbetreibers, Ebene für Ebene, der Domainnamen-Parsing-Anforderung von einem Root-Server an einen autorisierenden DNS-Server einer niedrigeren Ebene zur Durchführung einer rekursiven Abfrage;
Senden, durch den lokalen DNS-Server, der Domainnamen-Parsing-Anforderung an den Root-Server und Empfangen, durch den lokalen DNS-Server, eines NS-Eintrags eines autorisierenden DNS-Servers der oberen Ebene, der vom Root-Server zurückgegeben wird;
Senden, durch den lokalen DNS-Server, der Domainnamen-Parsing-Anforderung an den autorisierenden DNS-Server der oberen Ebene, und Empfangen, durch den lokalen DNS-Server, einer Benachrichtigung, dass ein Info-Server autorisiert wurde, der vom autorisierenden DNS-Server der oberen Ebene zurückgegeben wurde;
Senden, durch den lokalen DNS-Server, einer Anfrage für den NS-Eintrag des Info-Servers an den Root-Server und Empfangen, durch den lokalen DNS-Server, des NS-Eintrags des Info-Servers, der vom Root-Server zurückgegeben wurde;
Senden, durch den lokalen DNS-Server, der Domainnamen-Parsing-Anforderung an den Info-Server und Empfangen, durch den lokalen DNS-Server, eines NS-Eintrags eines externen autorisierten Servers, der von dem Info-Server zurückgegeben wird, wobei der externe autorisierte Server, wenn er eingerichtet ist, sich registriert und die Autorisierung von dem Info-Server erhält;
Senden, durch den lokalen DNS-Server, der Domainnamen-Parsing-Anforderung an den externen autorisierten Server und Empfangen, durch den lokalen DNS-Server, eines A-Eintrags eines autorisierenden DNS-Servers einer niedrigeren Ebene, der von dem externen autorisierten Server zurückgegeben wird, wobei eine IP-Adresse, die der geographischen Standortinformation des Netzbetreibers entspricht, die dem A-Eintrag zugeordnet ist, mit einer öffentlichen IP des lokalen DNS-Servers übereinstimmt; und
Senden, durch den lokalen DNS-Server, der Domainnamen-Parsing-Anforderung an den autorisierenden DNS-Server einer niedrigeren Ebene, und Empfangen, durch den lokalen DNS-Server, eines Domainnamen-Parsing-Ergebnisses, das vom autorisierenden DNS-Server einer niedrigeren Ebene zurückgegeben wird.

5. Domainnamen-Parsing-Verfahren nach Anspruch 4, ferner Folgendes umfassend:
einen Domainnamen der obersten Ebene, der von dem externen autorisierten Server geparst wurde, sich von dem Domainnamen der obersten Ebene in der Domainnamen-Parsing-Anforderung unterscheidet.

6. Domainnamen-Parsing-Verfahren nach Anspruch 4, wobei der externe autorisierte Server mindestens eine IP-Adresse und die geographische Standortinformation mindestens eines Betreibers speichert, die eine Eins-zu-Eins-Entsprechungsbeziehung mit der mindestens einen IP-Adresse bildet.

7. Domainnamen-Parsing-Verfahren nach Anspruch 4, wobei der Schritt nach dem Senden der Domainnamen-Parsing-Anforderung durch den lokalen DNS-Server an den externen autorisierten Server Folgendes umfasst:
Abgleichen, durch den externen autorisierten Server, der öffentlichen IP der lokalen DNS-Server mit mindestens einer IP-Adresse, um nach de entsprechenden geographischen Standortinformation des Betreibers zu suchen, und Bereitstellen, durch den externen autorisierten Server, des A-Eintrags der autorisierenden DNS-Server der niedrigeren Ebene, der der geographischen Standortinformation des Betreibers zugeordnet ist, für die lokalen DNS-Server zwecks Zugriff.

8. Domainnamen-Parsing-Verfahren nach Anspruch 5, wobei der autorisierende DNS-Server der oberen Ebene durch den Root-Server auf der Grundlage des Domainnamens der obersten Ebene in der Domainnamen-Parsing-Anforderung autorisiert wird.

9. Domainnamen-Parsing-System, das auf einem lokalen DNS-Server konfiguriert ist, umfassend:
ein erstes Transceivermodul, das dafür konfiguriert ist, den lokalen DNS-Server mindestens eines Netzbetreibers zu befähigen, entsprechend eine Domainnamen-Parsing-Anforderung von einem Client-Endgerät des mindestens einen Netzbetreibers zu empfangen;
ein zweites Transceivermodul, das dafür konfiguriert ist, den lokalen DNS-Server zu befähigen, die Domainnamen-Parsing-Anforderung von einem Root-Server an einen autorisierenden DNS-Server einer niedrigeren Ebene zwecks rekursiver Abfrage zu senden und einen NS-Eintrag eines autorisierenden DNS-Servers der oberen Ebene zu empfangen, der vom Root-Server zurückgegeben wird;
ein drittes Transceivermodul, das dafür konfiguriert ist, den lokalen DNS-Server zu befähigen, die Domainnamen-Parsing-Anforderung an den autorisierenden DNS-Server der oberen Ebene zu senden und eine Benachrichtigung zu erhalten, dass ein Info-Server autorisiert wurde, die vom autorisierenden DNS-Server der oberen Ebene zurückgegeben wird;
ein viertes Transceivermodul, das dafür konfiguriert ist, den lokalen DNS-Server zu befähigen, eine Anfrage für den NS-Eintrag des Info-Servers an den Root-Server zu senden und den vom Root-Server zurückgegebenen NS-Eintrag des Info-Servers zu empfangen;
ein fünftes Transceivermodul, das dafür konfiguriert ist, den lokalen DNS-Server zu befähigen, die Domainnamen-Parsing-Anforderung an den Info-Server zu senden und einen NS-Eintrag eines externen autorisierten Servers zu empfangen, der vom Info-Server zurückgegeben wird, wobei der externe autorisierte Server vom Info-Server eingerichtet, registriert und autorisiert wird;
ein sechstes Transceivermodul, das dafür konfiguriert ist, den lokalen DNS-Server zu befähigen, die Domainnamen-Parsing-Anforderung an den externen autorisierten Server zu senden und einen A-Eintrag eines autorisierenden DNS-Servers einer niedrigeren Ebene zu empfangen, der von dem externen autorisierten Server zurückgegeben wird, wobei eine IP-Adresse, die der geographischen Standortinformation des Netzbetreibers entspricht, die dem A-Eintrag zugeordnet ist, mit einer öffentlichen IP des lokalen DNS-Servers übereinstimmt; und
ein siebtes Transceivermodul, das dafür konfiguriert ist, den lokalen DNS-Server zu befähigen, die Domainnamen-Parsing-Anforderung an den autorisierenden DNS-Server einer niedrigeren Ebene zu senden und ein Domainnamen-Parsing-Ergebnis zu empfangen, das vom autorisierenden DNS-Server einer niedrigeren Ebene zurückgegeben wird.

## Revendications

1. Système de réseau DNS de système de noms de domaine, comprenant :
un serveur DNS local d'au moins un opérateur de réseau, configuré pour recevoir une demande d'analyse de nom de domaine d'un terminal client de l'au moins un opérateur de réseau, et envoyer la demande d'analyse de nom de domaine d'un serveur racine à un serveur DNS faisant autorité de niveau inférieur niveau par niveau pour effectuer une requête récursive ;
un serveur DNS faisant autorité de niveau supérieur, configuré pour, lors de la réception de la demande d'analyse de nom de domaine du serveur DNS local, informer le serveur DNS local qu'un serveur d'informations a été autorisé ;
le serveur d'informations, stockant au moins un type d'enregistrement NS d'un serveur autorisé externe, configuré pour, lors de la réception de la demande d'analyse de nom de domaine du serveur DNS local, fournir un enregistrement NS correspondant au serveur DNS local, de sorte que le serveur DNS local accède au serveur externe autorisé ;
le serveur autorisé externe, une fois établi, configuré pour s'enregistrer et obtenir l'autorisation du serveur d'informations, et stocker au moins une adresse IP et des informations de localisation géographique de l'au moins un opérateur de réseau ayant une relation de correspondance un à un avec l'au moins une adresse IP, dans lequel les informations de localisation géographique de l'au moins un opérateur de réseau s'associent chacune à un enregistrement A d'un serveur DNS faisant autorité de niveau inférieur correspondant, le serveur autorisé externe étant configuré pour, lors de la réception de la demande d'analyse de nom de domaine du serveur DNS local, faire correspondre une adresse IP publique du serveur DNS local avec l'au moins une adresse IP pour localiser les informations de localisation géographique d'un opérateur de réseau correspondant, et fournir l'enregistrement A du serveur DNS faisant autorité de niveau inférieur correspondant associé à l'opérateur de réseau au serveur DNS local auquel le serveur DNS local doit accéder ; et
le serveur DNS faisant autorité de niveau inférieur, configuré pour analyser la demande d'analyse de nom de domaine, lors de la réception de la demande d'analyse de nom de domaine envoyée par le serveur DNS local, pour fournir un résultat d'analyse de nom de domaine au serveur DNS local.

2. Système de réseau DNS selon la revendication 1, comprenant en outre :
un nom de domaine de niveau supérieur analysé par le serveur autorisé externe, différent du nom de domaine de niveau supérieur dans la demande d'analyse de nom de domaine.

3. Système de réseau DNS selon la revendication 1, dans lequel lors de l'ajout ou de la suppression d'un serveur autorisé externe et/ou d'un serveur DNS faisant autorité de niveau inférieur, l'enregistrement NS et/ou l'enregistrement A correspondant sont modifiés en conséquence.

4. Procédé d'analyse de nom de domaine, appliqué au système de réseau DNS selon l'une quelconque des revendications 1 à 3, comprenant les étapes consistant à :
recevoir, par un serveur DNS local d'au moins un opérateur de réseau, une demande d'analyse de nom de domaine depuis un terminal client de l'au moins un opérateur de réseau, et envoyer, par le serveur DNS local d'au moins un opérateur de réseau, niveau par niveau, la demande d'analyse de nom de domaine d'un serveur racine à un serveur DNS faisant autorité de niveau inférieur pour effectuer une requête récursive ;
envoyer, par le serveur DNS local, la demande d'analyse de nom de domaine au serveur racine, et recevoir, par le serveur DNS local, un enregistrement NS d'un serveur DNS faisant autorité de niveau supérieur renvoyé par le serveur racine ;
envoyer, par le serveur DNS local, la demande d'analyse de nom de domaine au serveur DNS faisant autorité de niveau supérieur, et recevoir, par le serveur DNS local, une notification qu'un serveur d'informations a été autorisé renvoyée par le serveur DNS faisant autorité de niveau supérieur ;
envoyer, par le serveur DNS local, une requête pour l'enregistrement NS du serveur d'informations au serveur racine, et recevoir, par le serveur DNS local, l'enregistrement NS du serveur d'informations renvoyé par le serveur racine ;
envoyer, par le serveur DNS local, la demande d'analyse de nom de domaine au serveur d'informations, et recevoir, par le serveur DNS local, un enregistrement NS d'un serveur autorisé externe renvoyé par le serveur d'informations, dans lequel le serveur autorisé externe, une fois établi, enregistre et obtient l'autorisation du serveur d'informations ;
envoyer, par le serveur DNS local, la demande d'analyse de nom de domaine au serveur autorisé externe, et recevoir, par le serveur DNS local, un enregistrement A d'un serveur DNS faisant autorité de niveau inférieur renvoyé par le serveur autorisé externe, dans lequel une adresse IP correspondant aux informations de localisation géographique de l'opérateur de réseau associées à l'enregistrement A correspond à une adresse IP publique du serveur DNS local ; et
envoyer, par le serveur DNS local, la demande d'analyse de nom de domaine au serveur DNS faisant autorité de niveau inférieur, et recevoir, par le serveur DNS local, un résultat d'analyse de nom de domaine renvoyé par le serveur DNS faisant autorité de niveau inférieur.

5. Procédé d'analyse de nom de domaine selon la revendication 4, comprenant en outre :
un nom de domaine de niveau supérieur analysé par le serveur autorisé externe, différent du nom de domaine de niveau supérieur dans la demande d'analyse de nom de domaine.

6. Procédé d'analyse de nom de domaine selon la revendication 4, dans lequel le serveur externe autorisé stocke au moins une adresse IP et les informations de localisation géographique d'au moins un opérateur formant une relation de correspondance un à un avec l'au moins une adresse IP.

7. Procédé d'analyse de nom de domaine selon la revendication 4, dans lequel l'étape après l'envoi, par le serveur DNS local, de la demande d'analyse de nom de domaine au serveur externe autorisé comprend les étapes consistant à :
faire correspondre, par le serveur externe autorisé, l'IP publique des serveurs DNS locaux, à au moins une adresse IP, pour rechercher les informations de localisation géographique correspondantes de l'opérateur, et fournir, au serveur externe autorisé, l'enregistrement A des serveurs DNS faisant autorité de niveau inférieur, associé aux informations de localisation géographique de l'opérateur, aux serveurs DNS locaux pour l'accès.

8. Procédé d'analyse de nom de domaine selon la revendication 5, dans lequel le serveur DNS faisant autorité de niveau supérieur est autorisé par le serveur racine sur la base du nom de domaine de niveau supérieur dans la demande d'analyse de nom de domaine.

9. Système d'analyse de nom de domaine configuré sur un serveur DNS local, comprenant :
un premier module émetteur-récepteur, configuré pour permettre au serveur DNS local d'au moins un opérateur de réseau de recevoir de manière correspondante une demande d'analyse de nom de domaine d'un terminal client de l'au moins un opérateur de réseau ;
un deuxième module émetteur-récepteur, configuré pour permettre au serveur DNS local d'envoyer la demande d'analyse de nom de domaine d'un serveur racine à un serveur DNS faisant autorité de niveau inférieur pour une requête récursive et de recevoir un enregistrement NS d'un serveur DNS faisant autorité de niveau supérieur renvoyé par le serveur racine ;
un troisième module émetteur-récepteur, configuré pour permettre au serveur DNS local d'envoyer la demande d'analyse de nom de domaine au serveur DNS faisant autorité de niveau supérieur, et de recevoir une notification qu'un serveur d'informations a été autorisé renvoyée par le serveur DNS faisant autorité de niveau supérieur ;
un quatrième module émetteur-récepteur, configuré pour permettre au serveur DNS local d'envoyer une requête pour l'enregistrement NS du serveur d'informations au serveur racine, et de recevoir l'enregistrement NS du serveur d'informations renvoyé par le serveur racine ;
un cinquième module émetteur-récepteur, configuré pour permettre au serveur DNS local d'envoyer la demande d'analyse de nom de domaine au serveur d'informations et de recevoir un enregistrement NS d'un serveur autorisé externe renvoyé par le serveur d'informations, le serveur autorisé externe étant établi, enregistré et autorisé à partir du serveur d'informations ;
un sixième module émetteur-récepteur, configuré pour permettre au serveur DNS local d'envoyer la demande d'analyse de nom de domaine au serveur autorisé externe, et de recevoir un enregistrement A d'un serveur DNS faisant autorité de niveau inférieur renvoyé par le serveur autorisé externe, dans lequel une adresse IP correspondant aux informations de localisation géographique de l'opérateur de réseau associées à l'enregistrement A correspond à une adresse IP publique du serveur DNS local ; et
un septième module émetteur-récepteur, configuré pour permettre au serveur DNS local d'envoyer la demande d'analyse de nom de domaine au serveur DNS faisant autorité de niveau inférieur et de recevoir un résultat d'analyse de nom de domaine renvoyé par le serveur DNS faisant autorité de niveau inférieur.
